# EUROPEAN PATENT APPLICATION

(11) **EP 3 726 431 A1**
(43) Date of publication of application: **21.10.2020**
(21) Application number: 20168901.5
(22) Date of filing: 09.04.2020
(51) Int. Cl.: G06K 9/62, G06K 9/32, G06K 9/00

(54) **OPTICAL CHARACTER RECOGNITION ERROR CORRECTION BASED ON VISUAL AND TEXTUAL CONTENTS**

(30) Priority: 15.04.2019 US 201916383971
(71) Applicant: General Electric Company, Schenectady, NY 12345 (US)
(72) Inventor: ABEDINI, Mani, Dubai (AE); NAJAFZADEH, Haleh, Dubai (AE); DESHMUKH, Dinakar, Evendale, Ohio 45241 (US)
(74) Representative: Openshaw & Co.

(57) **Abstract**

Described herein, system that facilitates OCR error correction based on visual and textual contents. According to an embodiment, a system can comprise splitting a scanned content into blocks using a neural network and tags the blocks as textual content and image content. The system can further comprise converting, the textual content to a word feature vector. The system can further comprise converting the image content to an image feature vector.

## Description

### TECHNICAL FIELD

This disclosure relates generally to optical character recognition (OCR), and more specifically, to OCR correctness based on visual and textual contents.

### BACKGROUND

Optical character recognition (OCR) convert typed images, handwritten or printed text into characters, such as ASCII. OCR technology has significantly improved for typed images and printed text. However, for handwritten images, the technology continues to struggle. In current OCR systems extract textual information and ignore the visual content (such as photos, graphs, charts, etc.) of the scanned document. When processing a document with photos and text, the OCR systems only analyze character symbols only then translate them into characters. However, todays OCR system do not utilize all the information available to accurately predict and adjust proposed words. The output of handwritten OCR is still very poor (approximately 30% accuracy at word level) and approximately 70% at document level. This gap can be filled by including image analysis and deep learning.

The above-described background relating to OCR technology is merely intended to provide a contextual overview of some current issues and is not intended to be exhaustive. Other contextual information may become further apparent upon review of the following detailed description.

### SUMMARY

The following presents a simplified summary of the specification in order to provide a basic understanding of some aspects of the specification. This summary is not an extensive overview of the specification. It is intended to neither identify key or critical elements of the specification, nor delineate any scope of the particular implementations of the specification or any scope of the claims. Its sole purpose is to present some concepts of the specification in a simplified form as a prelude to the more detailed description that is presented later.

According to an embodiment, a system can comprise a memory that stores computer executable components and a processor that executes the computer executable components stored in the memory. The computer executable components can comprise an image categorizing component that splits a scanned content into blocks using a neural network and tags the blocks as first content and second content. The computer executable components can further comprise a first content analyzing component that converts the first content to a word feature vector. The computer executable components can further comprise a second content analyzing component that converts the second content to an image feature vector.

In some aspects of an embodiment, the first content analyzing component further comprises a word building component that builds a word from the first content employing an optical character recognition component to recognize characters of the first content. In some aspects of an embodiment, the first content analyzing component further comprises a vector generating component that converts the word to the word feature vector. In some aspects of an embodiment, wherein the second content analyzing component employs a convolution neural network to convert the second content to the image feature vector. In some aspects of an embodiment, the computer executable components further comprise an error correction component that employs a multi-direction long short-term memory module to identify an error and correct the error. In some aspects of an embodiment, the computer executable components further comprise a word generating component that generates a final word using the word feature vector and the image feature vector. In some aspects of an embodiment, the word generating component employs a bidirectional long short-term memory module to learn an association between the first content and the second content to generate the final word.

According to another embodiment, a computer-implemented method can comprise splitting, by a system comprising a processor, a scanned content into blocks using a neural network and tags the blocks as textual content and image content. The computer-implemented method can further comprise converting, by the system, the textual content to a word feature vector. The computer-implemented method can further comprise converting, by the system, the image content to an image feature vector.

According to another embodiment, computer readable storage device comprising instructions that, in response to execution, cause a system comprising a processor to perform operations. The operations can comprise splitting a scanned content into blocks using a neural network and tags the blocks as textual content and image content. The operations can further comprise converting, the textual content to a word feature vector. The operations can further comprise converting the image content to an image feature vector.

The following description and the annexed drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF DRAWINGS

Non-limiting and non-exhaustive embodiments of the subject disclosure are described with reference to the following figures, wherein like reference numerals refer to like parts throughout the various views unless otherwise specified.
FIG. 1 illustrates an example of non-limiting OCR system employed to facilitate OCR error correction based on visual and textual contents in accordance with one or more embodiments described herein.
FIG. 2A illustrates an example of non-limiting contents of document (e.g., 102 of FIG. 1) in accordance with one or more embodiments described herein.
FIG. 2B illustrates an example of non-limiting image processing in accordance with one or more embodiments described herein.
FIG. 2C illustrates an example of non-limiting textual processing in accordance with one or more embodiments described herein.
FIG. 3 illustrates an example of non-limiting bidirectional LSTM in accordance with one or more embodiments described herein.
FIG. 4 illustrates a block diagram of an example, non-limiting system that facilitates OCR error correction based on visual and textual contents in accordance with one or more embodiments described herein.
FIG. 5 illustrates a block diagram of an example, non-limiting system that facilitates OCR error correction based on visual and textual contents in accordance with one or more embodiments described herein.
FIG. 6 illustrates a block diagram of an example, non-limiting system that facilitates OCR error correction based on visual and textual contents in accordance with one or more embodiments described herein.
FIG. 7 depicts a diagram of an example, non-limiting computer implemented method that facilitates using the OCR system accordance with one or more embodiments describe herein.
FIG. 8 depicts a diagram of an example, non-limiting computer implemented method that facilitates using the OCR system accordance with one or more embodiments describe herein.
FIG. 9 depicts a diagram of an example, non-limiting computer implemented method that facilitates using the OCR system accordance with one or more embodiments describe herein.
FIG. 10 illustrates a block diagram of an example, non-limiting operating environment in which one or more embodiments described herein can be facilitated.

### DETAILED DESCRIPTION

The following detailed description is merely illustrative and is not intended to limit embodiments and/or applications or uses of embodiments. Furthermore, there is no intention to be bound by any expressed or implied information presented in the preceding Summary section, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident; however, in various cases, that one or more embodiments can be practiced without these specific details.

In several embodiments, a system and method are described herein that splits a scanned content into blocks and the blocks are tagged as a textual content and/or visual content. The textual content is processed by an OCR system to recognize character by character to build a word. The proposed word is converted to vector using a word to vector algorithm, for example word2vec. In parallel, the visual content is converted to feature vector. The extracted list of vectors are further evaluated by a bidirectional algorithm to make correction to the proposed word utilizing images, context and historical knowledge (e.g., neural neworks).

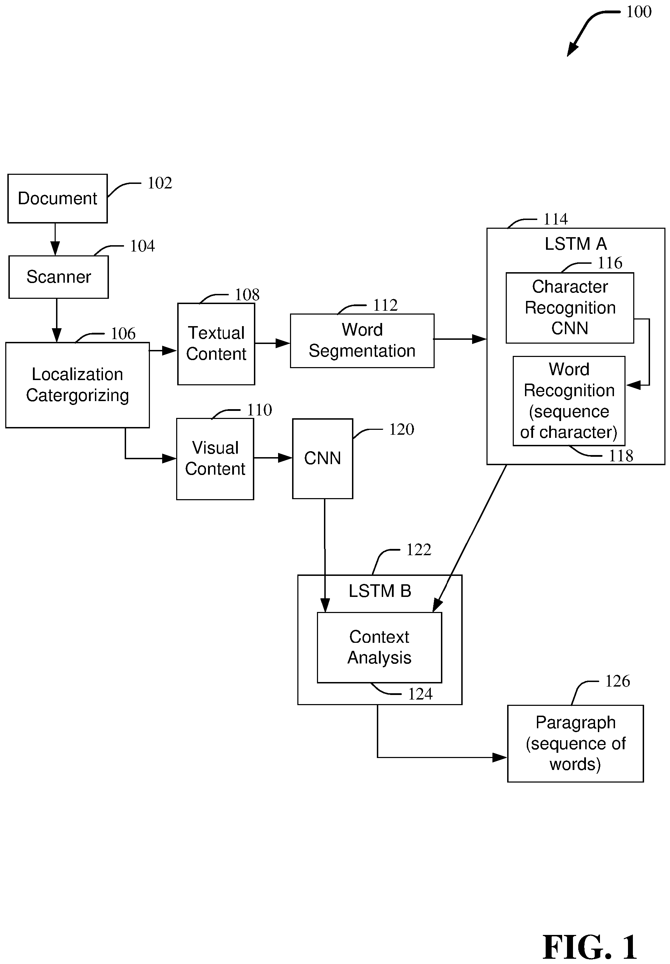

FIG. 1 illustrates an example of non-limiting optical character recognition (OCR) system 100 employed to facilitate OCR error correction based on visual and textual contents in accordance with one or more embodiments described herein. Repetitive description of like elements employed in respective embodiments is omitted for sake of brevity. According to some embodiments, a system and method is provided that splits the content into blocks and tags the content as textual content or visual content. Then the textual content is processed by an OCR system to recognize character by character to build a word. The proposed word is then converted to vector using standard techniques, for example "word2vec." In parallel, visual content is converted to feature vector(s). An extracted list of vectors is processed by a Multi-directional long-term memory network (LSTM) to identify errors and fix such errors based on additional or previous related vectors.

In some embodiments, an original document 102 can be scanned using a scanner 104. A scanned document is provided to a categorizing component 106 for localizing, categorizing, or splitting the scanned content into blocks using a neural network and tags the blocks as textual content 108 and visual content 110. The textual content 108 is segmented into words by one or more words segmentation techniques 112 using long-term memory network LSTM-A 114. LSTM architecture is specifically designed for sequence prediction with spatial inputs, like text and images.

LSTM-A 114 utilizes a convolution neural network (CNN) to perform character recognition 116 followed by word recognition 118. Upon completing word recognition, for additional verification and confirmation, an LSTM-B 122 (e.g., a multi-directional LSTM-B) is utilized to perform context analysis 124 to remove errors based analyzing previous vectors and new vectors. In some embodiments, context analysis 124 is a method of comparing a word, a paragraph, an image in context of other words, paragraphs or images. In some embodiments, a word generated by the CNN is analyzed against an image contained in the scanned document. In some embodiments, the type of a document us considered for correcting or verifying accuracy of the proposed word. If the word is associated with other images, there is higher probability that the generated word is correct. For example, if a generated word is "ignitor" from a hand-written portion of the scanned document and image(s) contained in the document are of fire, it is more likely that the generated word is "ignitor."

In some embodiments, the visual content 110 is processed using CNN 120 and additionally utilizing LSTM B 122 to perform context analysis 124. In some embodiments, the word is analyzed in combination with one or more image to increase accuracy of context analysis 124. In some embodiments, a sentence and/or a paragraph is generated by collecting words at 126. In an implementation, as the sentence or paragraph is being generated, words may be modified based on relation to new words or new images processed as part of the document.

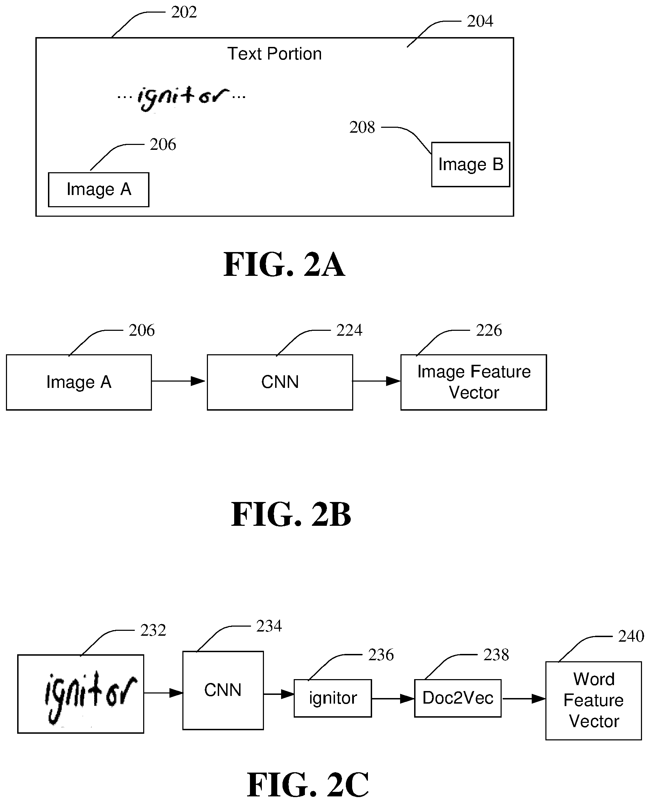

FIG. 2A illustrates an example of non-limiting contents of document 202 (e.g., 102 of FIG. 1) in accordance with one or more embodiments described herein. Repetitive description of like elements employed in respective embodiments is omitted for sake of brevity. According to some embodiments, the document 202 can comprise a text portion 204, a first image portion 206 and a second image portion 208. The text portion may comprise hand written portion and/or typed portion.

FIG. 2B illustrates an example of non-limiting image processing in accordance with one or more embodiments described herein. Repetitive description of like elements employed in respective embodiments is omitted for sake of brevity. According to some embodiments, the block of data at 206 represents an image (e.g. the image A 206). The image A 206 (e.g., image portion of the document 202) is provided to the CNN 224 to be converted into the image feature vector. In some embodiments, the CNN analyzes the image and generates an image feature vector that comprises various content-based information extracted from the image A 206. For example, but not limited to, the content may be an image of a plane, an image of an engine or part of an engine, an image of fire, an image of a person or a crowd and/or image of a pilot.

FIG. 2C illustrates an example of non-limiting textual processing in accordance with one or more embodiments described herein. Repetitive description of like elements employed in respective embodiments is omitted for sake of brevity. According to some embodiments, if the block of data is textual, the block is provided to LSTM A 114. In some embodiments, a textual block comprising a handwritten word "ignitor" is provided to CNN 234. The CNN 234 converts the handwritten word into a proposed word "ignitor." The proposed word is provided to a vector converter 238 to convert the proposed word into a word feature vector.

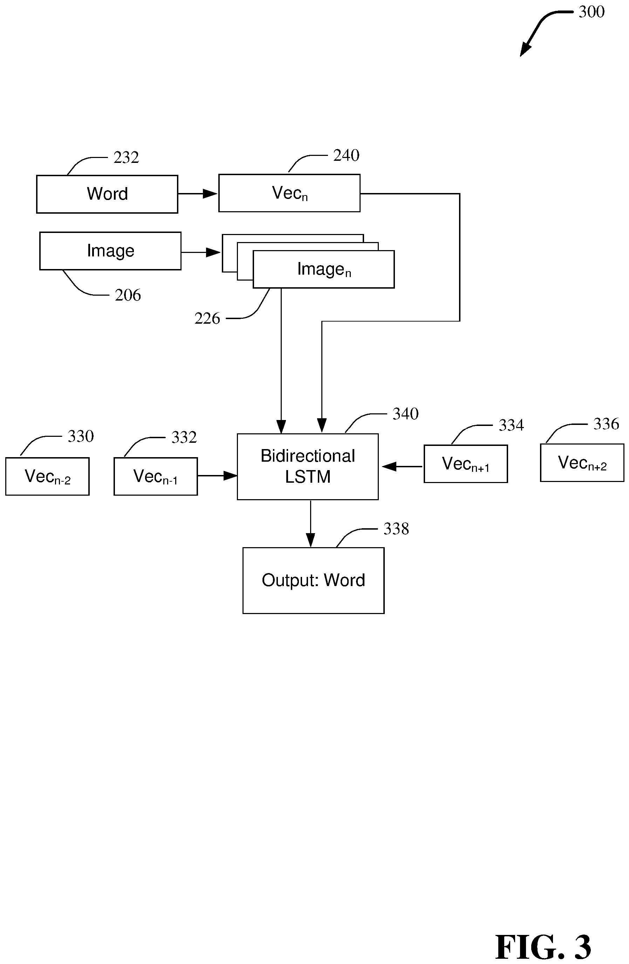

FIG. 3 illustrates an example of non-limiting bidirectional LSTM in accordance with one or more embodiments described herein. Repetitive description of like elements employed in respective embodiments is omitted for sake of brevity. According to some embodiments, all vectors generated from words and images are provided to a bidirectional LSTM 340 to learn the association/correlation between words and image contents. In some embodiments, a word vector 240 ("n" representing current vector) and image vectors are provided to bidirectional LSTM 340 to generate final word 338. The bidirectional LSTM analyzes the current word and image vectors against previous vectors to correct errors. In some embodiments, bidirectional LSTM 340 can analyze subsequent word and/or image vectors to modify the output word. For example, the bidirectional LSTM 340 may evaluate a previous image/word to determine if there is a relation between the current word and previous image/word (e.g., vector 332 and vector 330) to make necessary correction. The bidirectional LSTM 340 may store the word and revaluate upon generating a subsequent image/word (e.g., vector 334 and vector 336).

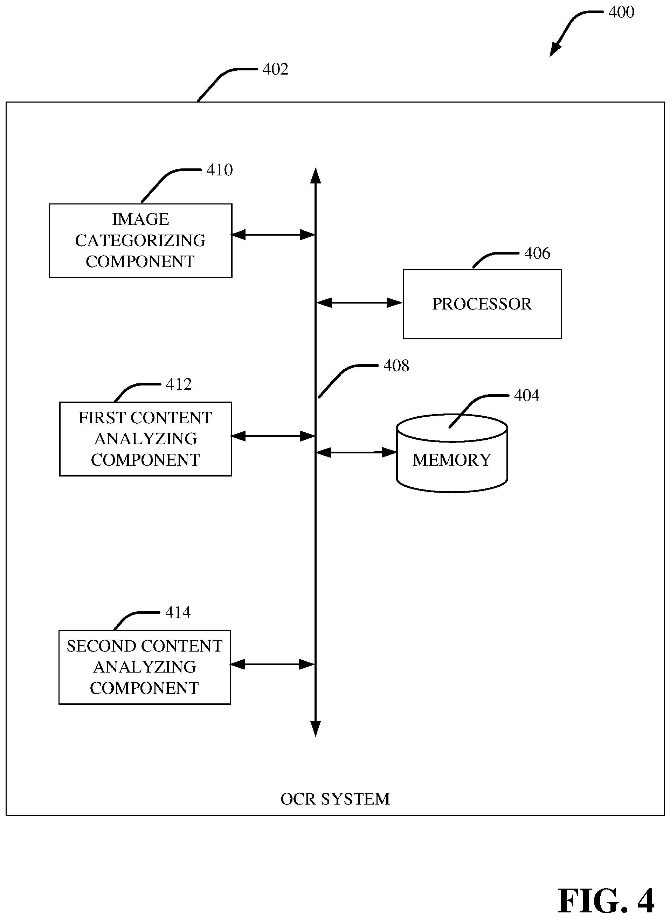

FIG. 4 illustrates a block diagram of an example, non-limiting system 400 that facilitates OCR error correction based on visual and textual contents in accordance with one or more embodiments described herein. Repetitive description of like elements employed in respective embodiments is omitted for sake of brevity. According to some embodiments, an OCR system 402 can include or otherwise be associated with a memory 404, a controller component 406 (also referred to as a "processor") that executes computer executable components stored in a memory 404. The OCR system 402 can further include a system bus 408 that can couple various components including, but not limited to, an image categorizing component 410, a first content analyzing component 412 and a second content analyzing component 414.

Aspects of systems (e.g., the OCR system 402 and the like), apparatuses, or processes explained in this disclosure can constitute machine-executable component(s) embodied within machine(s), e.g., embodied in one or more computer readable mediums (or media) associated with one or more machines. Such component(s), when executed by the one or more machines, e.g., computer(s), computing device(s), virtual machine(s), etc. can cause the machine(s) to perform the operations described.

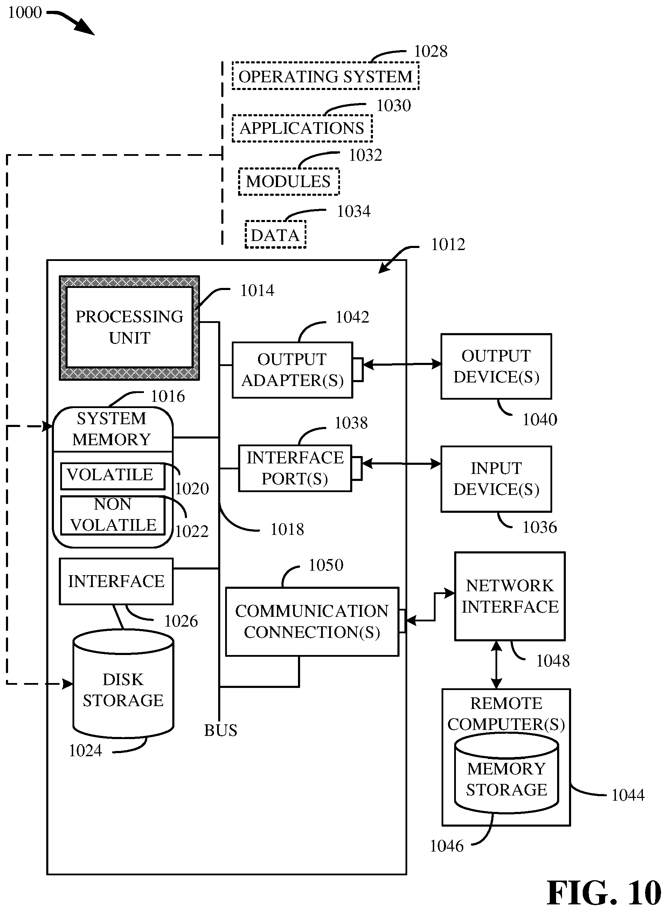

It should be appreciated that the embodiments of the subject disclosure depicted in various figures disclosed herein are for illustration only, and as such, the architecture of such embodiments are not limited to the systems, devices, and/or components depicted therein. For example, in some embodiments, the OCR system 402 can comprise various computer and/or computing-based elements described herein with reference to operating environment 1000 and FIG. 10. In several embodiments, such computer and/or computing-based elements can be used in connection with implementing one or more of the systems, devices, and/or components shown and described in connection with FIG. 4 or other figures disclosed herein.

According to several embodiments, the memory 404 can store one or more computer and/or machine readable, writable, and/or executable components and/or instructions that, when executed by controller component 406, can facilitate performance of operations defined by the executable component(s) and/or instruction(s). For example, the memory 404 can store computer and/or machine readable, writable, and/or executable components and/or instructions that, when executed by the controller component 406, can facilitate execution of the various functions described herein relating to the image categorizing component 410, the first content analyzing component 412 and the second content analyzing component 414.

In several embodiments, the memory 404 can comprise volatile memory (e.g., random access memory (RAM), static RAM (SRAM), dynamic RAM (DRAM), etc.) and/or non-volatile memory (e.g., read only memory (ROM), programmable ROM (PROM), electrically programmable ROM (EPROM), electrically erasable programmable ROM (EEPROM), etc.) that can employ one or more memory architectures. Further examples of memory 404 are described below with reference to system memory 1016 and FIG. 10. Such examples of memory 404 can be employed to implement any embodiments of the subject disclosure.

According to some embodiments, the controller component 406 can comprise one or more types of processors and/or electronic circuitry that can implement one or more computer and/or machine readable, writable, and/or executable components and/or instructions that can be stored on the memory 404. For example, the controller component 406 can perform various operations that can be specified by such computer and/or machine readable, writable, and/or executable components and/or instructions including, but not limited to, logic, control, input/output (I/O), arithmetic, and/or the like. In some embodiments, controller component 406 can comprise one or more central processing unit, multi-core processor, microprocessor, dual microprocessors, microcontroller, System on a Chip (SOC), array processor, vector processor, and/or another type of processor.

In some embodiments, the components of OCR system 402, for example, the controller component 406, the memory 404, the image categorizing component 410, the first content analyzing component 412 and the second content analyzing component 414 can be communicatively, electrically, and/or operatively coupled to one another via the system bus 408 to perform functions of the OCR system 402, and/or any components coupled therewith. In several embodiments, the system bus 408 can comprise one or more memory bus, memory controller, peripheral bus, external bus, local bus, and/or another type of bus that can employ various bus architectures. Further examples of the system bus 408 are described below with reference to a system bus 1018 and FIG. 10. Such examples of system bus 408 can be employed to implement any embodiments of the subject disclosure.

In several embodiments, the OCR system 402 can comprise one or more computer and/or machine readable, writable, and/or executable components and/or instructions that, when executed by the controller component 406, can facilitate performance of operations defined by such component(s) and/or instruction(s). Further, in numerous embodiments, any component associated with the OCR system 402, as described herein with or without reference to the various figures of the subject disclosure, can comprise one or more computer and/or machine readable, writable, and/or executable components and/or instructions that, when executed by the controller component 406, can facilitate performance of operations defined by such component(s) and/or instruction(s). For example, the image categorizing component 410, and/or any other components associated with the OCR system 402 (e.g., communicatively, electronically, and/or operatively coupled with and/or employed by OCR system 402), can comprise such computer and/or machine readable, writable, and/or executable component(s) and/or instruction(s). Consequently, according to numerous embodiments, the OCR system 402 and/or any components associated therewith, can employ the controller component 406 to execute such computer and/or machine readable, writable, and/or executable component(s) and/or instruction(s) to facilitate performance of one or more operations described herein with reference to the OCR system 402 and/or any such components associated therewith. In some embodiments, the OCR system 402 can facilitate performance of operations related to and/or executed by the components of OCR system 402, for example, the controller component 406, the memory 404, the image categorizing component 410, the first content analyzing component 412 and the second content analyzing component 414. For example, as described in detail below, the OCR system 402 can facilitate: splitting, by a system comprising a processor (e.g., the image categorizing component 410), a scanned content into blocks using a neural network and marks the blocks as textual content and image content; converting, by the system (the first content analyzing component 412), the textual content to a word feature vector; and converting, by the system (the second content analyzing component 414), the image content to an image feature vector.

In some embodiments, the image categorizing component 410 can comprise, but not limited to, one or more electronic devices and processor to process a scanned document. In some embodiments, the image categorizing component 410 splits the scanned content into blocks using a neural network and tags the blocks as first content and second content. In some embodiments, the first content comprises textual data which can be standard text (e.g., typed characters) or hand-written text. In some embodiments, second content comprises blocks of image (e.g., photos, charts, graphs). In some embodiments, bounding box (e.g., the scanned document is organized into several small boxes) can be used to identify a portion of scanned document as an image. In some embodiments, depending the scanned document, one or more blocks can be image content (e.g., second content). In some embodiments, neural networks may be utilized to split the scanned document is blocks comprising image content and/or blocks comprising textual content. Once the blocks have been identified, the image categorizing component 410 identifies the type of content, such as paragraphs of text, photo, figure, graph, tabular data, charts, etc. A neural network with learning algorithm may be utilized to identify one or more blocks. In some embodiments LSTM with recurrent neural network may be employed to identify blocks of information using attention-based method.

In some embodiments, the first content analyzing component 412 can comprise, but not limited to, one or more electronic devices and processor to analyze the blocks. In some embodiments, the first content analyzing component 412 converts the first content to a word feature vector. As illustrated in FIG. 2C, the first content (e.g., block of textual content) is provided to LSTM-CNN to predict a word. The word is provided to a vector generation engine (e.g., Doc2Vec) to generate a word feature vector. In some embodiments, the first content analyzing component 412 comprises a word building component (not shown) that builds a word from first content employing an optical character recognition component to recognize characters of the first content. In some embodiments, the first content analyzing component 412 comprises a vector generating component (not shown) that converts the word to the word feature vector. In some aspects of an embodiment, the first content analyzing component 412 further comprises a word building component that builds a word from the first content employing an optical character recognition component to recognize characters of the first content. In some aspects of an embodiment, the first content analyzing component further comprises a vector generating component that converts the word to the word feature vector.

In some embodiments, the second content analyzing component 414 can comprise, but not limited to, one or more electronic devices and processor to analyze the blocks. In some embodiments, the second content analyzing component 414 converts the second content to an image feature vector. As illustrated in FIG. 2B, the second content (e.g., block of image) is provided to the convolution neural network that converts the second content to the image feature vector. In some embodiments, the CNN may utilize prior analysis of images either from the current scanned document or prior scanned documents similar to the current document to generate the image feature vector. In some aspects of an embodiment, wherein the second content analyzing component 414 employs a convolution neural network to convert the second content to the image feature vector.

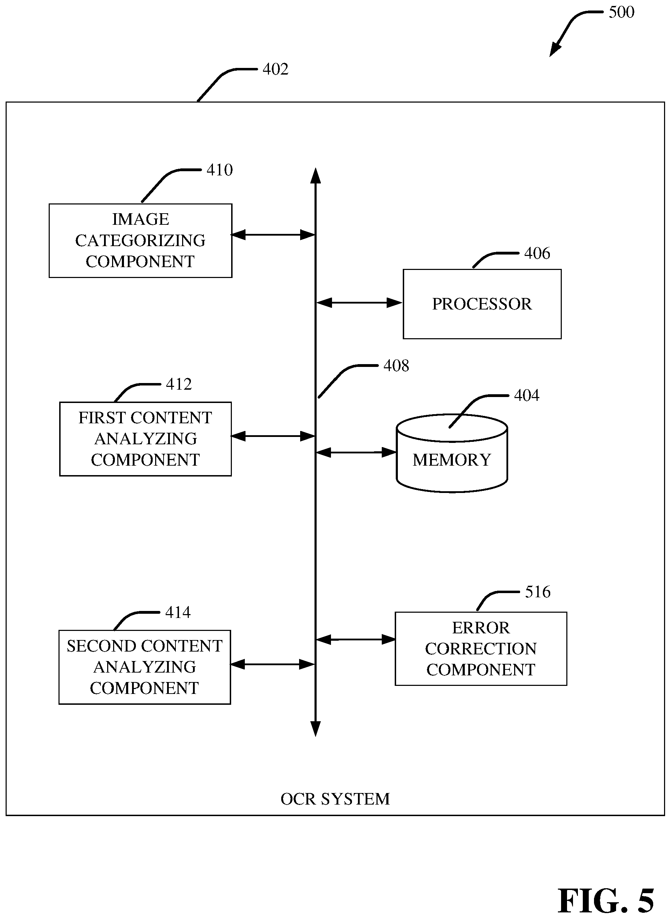

FIG. 5 illustrates a block diagram of an example, non-limiting system 500 that facilitates OCR error correction based on visual and textual contents in accordance with one or more embodiments described herein. Repetitive description of like elements employed in respective embodiments is omitted for sake of brevity. According to several embodiments, the system 500 can comprise OCR system 402. In some embodiments, OCR system 402 can further comprise an error correction component 516.

In some aspects of an embodiment, the error correction component 516 can comprise one or more sensors, memory, and one or more processors to facilitate correcting error in the proposed word. In some embodiments, the error correction component 516 facilitates employs a multi-direction long short-term memory module to identify errors and correct the errors. In some embodiments, the multi-directional/bi-directional neural network (NN) analyzes one or more previous vectors (e.g., image feature vector or word feature vector) to determine contextual relationship to adjust the current word. In some embodiments, the NN checks the image feature vector to verify the current generated word. For example, if image is of fire or engine and current generated word is "ignnite" (e.g., misspelled), the contextual analysis would result in correcting the misspelled word to "ignite." In some embodiments, the NN may analyze subsequent words or images to make correction. For example, the work "ignite" may be modified if the subsequent image indicates that the word should be "ignitor." In some embodiments, the error correction component 516 can also evaluate the document type to verify accuracy of the proposed word. For example, if the document is related to aviation, the visual content is of engine igniting, and proposed word is "ignitor," the NN can determine that there is high probability that the proposed word is accurate. In another examples, when the proposed word is not directly related to the document (e.g., "ignitor" for a medical document), the NN can continue analyze other words and images, and make adjustments to the proposed word.

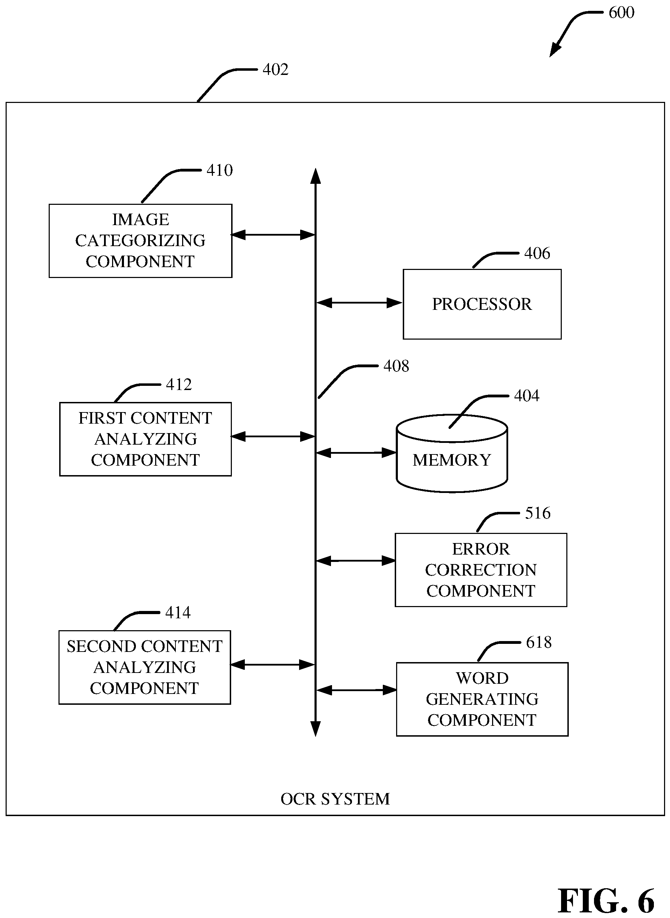

FIG. 6 illustrates a block diagram of an example, non-limiting system 600 that facilitates OCR error correction based on visual and textual contents in accordance with one or more embodiments described herein. Repetitive description of like elements employed in respective embodiments is omitted for sake of brevity. According to several embodiments, the system 600 can comprise OCR system 402. In some embodiments, OCR system 402 can further comprise a word generating component 618.

In some aspects of an embodiment, the word generating component 618 generates a final word using the word vector and the image vector. Upon performing various contextual analyses discussed above (e.g., by NN to that compared prior related words, subsequent words, images, document type, etc.), the word generating component 618 facilitates generating a final word. In some embodiments, the word is generated by analyzing the visual content and textual content.

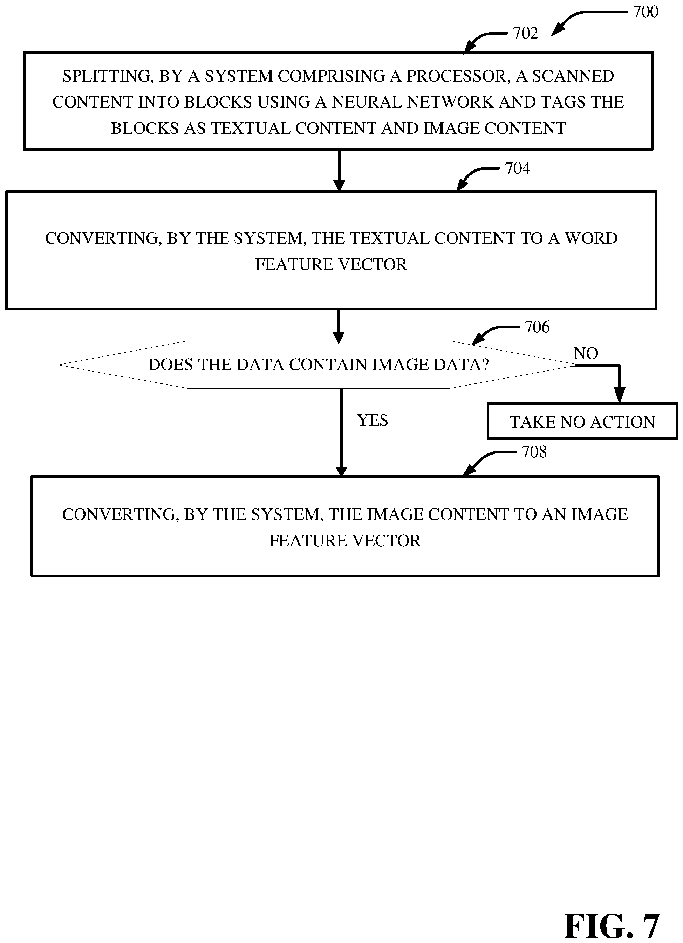

FIG. 7 depicts a diagram of an example, non-limiting computer implemented method that facilitates using the OCR system 402 accordance with one or more embodiments describe herein. Repetitive description of like elements employed in other embodiments described herein is omitted for sake of brevity. In some examples, flow diagram 700 can be implemented by operating environment 1000 described below. It can be appreciated that the operations of flow diagram 700 can be implemented in a different order than is depicted.

In non-limiting example embodiments, a computing device (or system) (e.g., computer 1012) is provided, the device or system comprising one or more processors and one or more memories that stores executable instructions that, when executed by the one or more processors, can facilitate performance of the operations as described herein, including the non-limiting methods as illustrated in the flow diagrams of Fig. 7.

Operation 702 splitting, by a system comprising a processor, a scanned content into blocks using a neural network and marks the blocks as textual content and image content. Operation 704 depicts, converting, by the system, the textual content to a word feature vector. Operation 706 depicts determining if the scanned data comprises image data (e.g. visual content, such as images or photos). If the scanned data comprises image data, then perform operation 708. Otherwise, continue monitoring. Operation 708 depicts converting, by the system, the image content to an image feature vector.

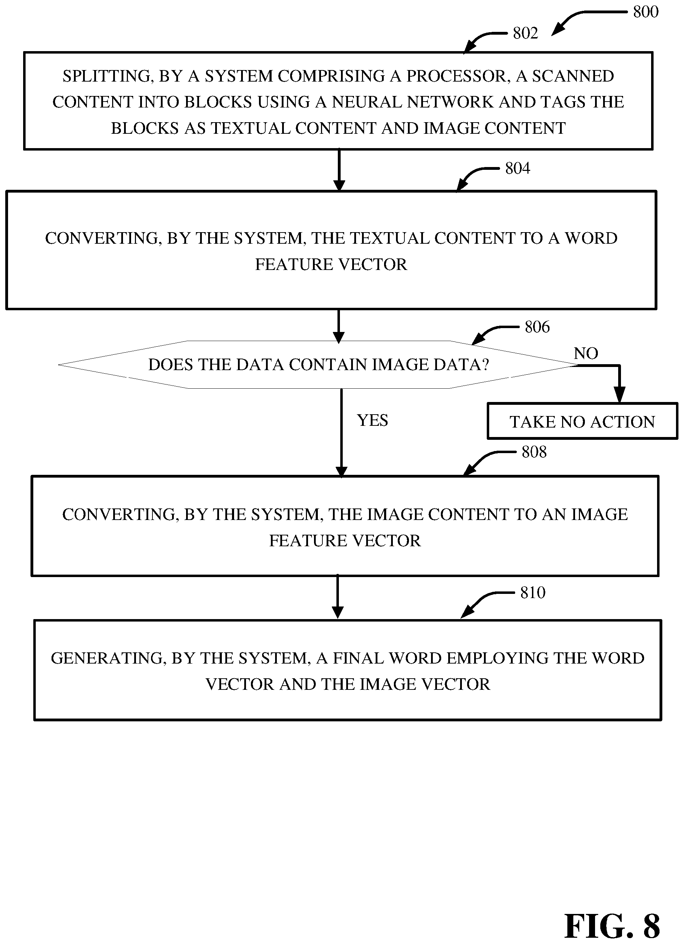

FIG. 8 depicts a diagram of an example, non-limiting computer implemented method that facilitates using the OCR system 402 accordance with one or more embodiments describe herein. Repetitive description of like elements employed in other embodiments described herein is omitted for sake of brevity. In some examples, flow diagram 800 can be implemented by operating environment 1000 described below. It can be appreciated that the operations of flow diagram 800 can be implemented in a different order than is depicted.

In non-limiting example embodiments, a computing device (or system) (e.g., computer 1012) is provided, the device or system comprising one or more processors and one or more memories that stores executable instructions that, when executed by the one or more processors, can facilitate performance of the operations as described herein, including the non-limiting methods as illustrated in the flow diagrams of Fig. 8.

Operation 802 splitting, by a system comprising a processor, a scanned content into blocks using a neural network and marks the blocks as textual content and image content. Operation 804 depicts, converting, by the system, the textual content to a word feature vector. Operation 806 depicts determining if the scanned data comprises image data (e.g. visual content, such as images or photos). If the scanned data comprises image data, then perform operation 808. Otherwise, continue monitoring. Operation 808 depicts converting, by the system, the image content to an image feature vector. Operation 810 depicts generating, by the system, a final word employing the word vector and the image vector.

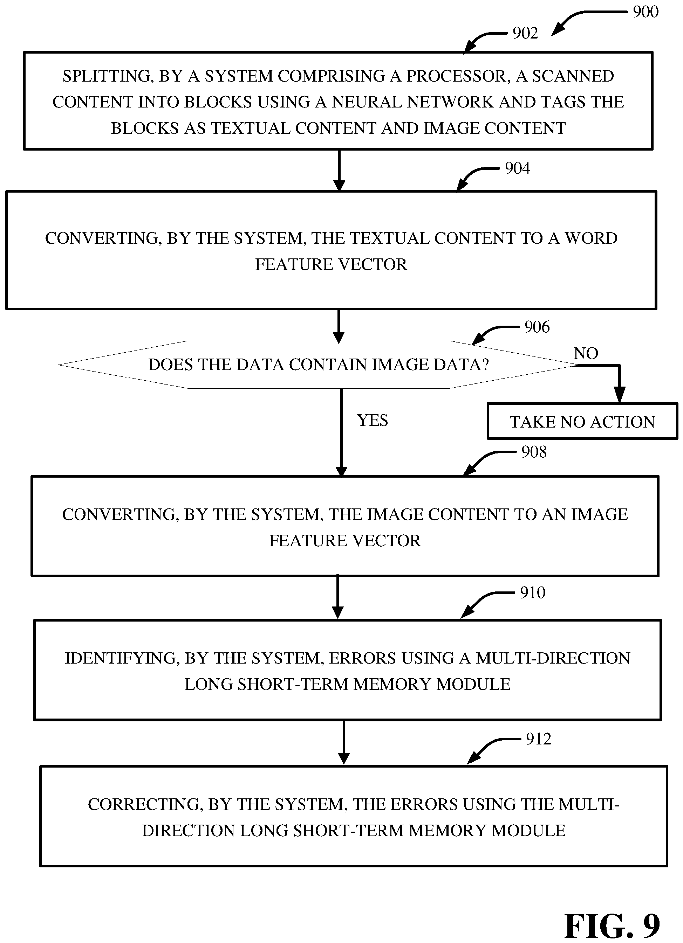

FIG. 9 depicts a diagram of an example, non-limiting computer implemented method that facilitates using the OCR system 402 accordance with one or more embodiments describe herein. Repetitive description of like elements employed in other embodiments described herein is omitted for sake of brevity. In some examples, flow diagram 900 can be implemented by operating environment 1000 described below. It can be appreciated that the operations of flow diagram 900 can be implemented in a different order than is depicted.

In non-limiting example embodiments, a computing device (or system) (e.g., computer 1012) is provided, the device or system comprising one or more processors and one or more memories that stores executable instructions that, when executed by the one or more processors, can facilitate performance of the operations as described herein, including the non-limiting methods as illustrated in the flow diagrams of Fig. 9.

Operation 902 splitting, by a system comprising a processor, a scanned content into blocks using a neural network and marks the blocks as textual content and image content. Operation 904 depicts, converting, by the system, the textual content to a word feature vector. Operation 906 depicts determining if the scanned data comprises image data (e.g. visual content, such as images or photos). If the scanned data comprises image data, then perform operation 908. Otherwise, continue monitoring. Operation 908 depicts converting, by the system, the image content to an image feature vector. Operation 910 depicts identifying, by the system, errors using a multi-direction long short-term memory module. Operation 912, depicts correcting, by the system, the errors using the multi-direction long short-term memory module.

FIG. 10 illustrates a block diagram of an example, non-limiting operating environment 1000 in which one or more embodiments described herein can be facilitated. The operating environment 1000 for implementing various aspects of this disclosure can also include a computer 1012. The computer 1012 can also include a processing unit 1014, a system memory 1016, and a system bus 1018. The system bus 1018 couples system components including, but not limited to, the system memory 1016 to the processing unit 1014. The processing unit 1014 can be any of various available processors. Dual microprocessors and other multiprocessor architectures also can be employed as the processing unit 1014. The system bus 1018 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1094), and Small Computer Systems Interface (SCSI). The system memory 1016 can also include volatile memory 1020 and nonvolatile memory 1022. The basic input/output system (BIOS), containing the basic routines to transfer information between elements within the computer 1012, such as during start-up, is stored in nonvolatile memory 1022. By way of illustration, and not limitation, nonvolatile memory 1022 can include read only memory (ROM), programmable ROM (PROM), electrically programmable ROM (EPROM), electrically erasable programmable ROM (EEPROM), flash memory, or nonvolatile random-access memory (RAM) (e.g., ferroelectric RAM (FeRAM). Volatile memory 1020 can also include random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM

Computer 1012 can also include removable/non-removable, volatile/non-volatile computer storage media. FIG. 10 illustrates, for example, a disk storage 1024. Disk storage 1024 can also include, but is not limited to, devices like a magnetic disk drive, floppy disk drive, tape drive, Jaz drive, Zip drive, LS-100 drive, flash memory card, or memory stick. The disk storage 1024 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1024 to the system bus 1018, a removable or non-removable interface is typically used, such as interface 1026. FIG. 10 also depicts software that acts as an intermediary between users and the basic computer resources described in the suitable operating environment 1001. Such software can also include, for example, an operating system 1028. Operating system 1028, which can be stored on disk storage 1024, acts to control and allocate resources of the computer 1012. System applications 1030 take advantage of the management of resources by operating system 1028 through program modules 1032 and program data 1034, e.g., stored either in system memory 1016 or on disk storage 1024. It is to be appreciated that this disclosure can be implemented with various operating systems or combinations of operating systems. A user enters commands or information into the computer 1012 through input device(s) 1036. Input devices 1036 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1014 through the system bus 1018 via interface port(s) 1038. Interface port(s) 1038 include, for example, a serial port, a parallel port, a game port, and a universal serial bus (USB). Output device(s) 1040 use some of the same type of ports as input device(s) 1036. Thus, for example, a USB port can be used to provide input to computer 1012, and to output information from computer 1012 to an output device 1040. Output adapter 1042 is provided to illustrate that there are some output devices 1040 like monitors, speakers, and printers, among other output devices 1040, which require special adapters. The output adapters 1042 include, by way of illustration and not limitation, video and sound cards that provide a means of connection between the output device 1040 and the system bus 1018. It should be noted that other devices and/or systems of devices provide both input and output capabilities such as remote computer(s) 1044.

Computer 1012 can operate in a networked environment using logical connections to one or more remote computers, such as remote computer(s) 1044. The remote computer(s) 1044 can be a computer, a server, a router, a network PC, a workstation, a microprocessor based appliance, a peer device or other common network node and the like, and typically can also include many or all the elements described relative to computer 1012. For purposes of brevity, only a memory storage device 1046 is illustrated with remote computer(s) 1044. Remote computer(s) 1044 is logically coupled to computer 1012 through a network interface 1048 and then physically coupled via communication connection 1050. Network interface 1048 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 1050 refers to the hardware/software employed to connect the network interface 1048 to the system bus 1018. While communication connection 1050 is shown for illustrative clarity inside computer 1012, it can also be external to computer 1012. The hardware/software for connection to the network interface 1048 can also include, for exemplary purposes only, internal and external technologies such as, modems including regular telephone grade modems, cable modems and DSL modems, ISDN adapters, and Ethernet cards.

Embodiments of the present innovation may be a system, a method, an apparatus and/or a computer program product at any possible technical detail level of integration. The computer program product can include a computer readable storage medium (or media) having computer readable program instructions thereon for causing a processor to carry out aspects of the present innovation. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various aspects of the present innovation can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be coupled to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to customize the electronic circuitry, to perform aspects of the present innovation.

Aspects of the present innovation are described herein with reference to flowchart illustrations and/or block diagrams of methods, apparatus (systems), and computer program products according to embodiments of the innovation. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present innovation. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc. that perform tasks and/or implement abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments where tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a server computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nanoscale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems, computer program products, and computer-implemented methods. It is, of course, not possible to describe every conceivable combination of components, products and/or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim. The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Further aspects of the invention are provided by the subject matter of the following clauses:
1. A system, comprising:
   a memory having stored thereon computer executable components;
   a processor that executes at least the following computer executable components:
      an image categorizing component that splits a scanned content into blocks using a neural network and tags the blocks as first content and second content;
      a first content analyzing component that converts the first content to a word feature vector; and
      a second content analyzing component that converts the second content to an image feature vector.
2. The system of any preceding clause, wherein the first content analyzing component comprises a word building component that builds a word from the first content employing an optical character recognition component to recognize characters of the first content.
3. The system of any preceding clause, wherein the first content analyzing component comprises a vector generating component that converts the word to the word feature vector.
4. The system of any preceding clause, wherein the second content analyzing component employs a convolution neural network to convert the second content to the image feature vector.
5. The system of any preceding clause, wherein the computer executable components further comprise:
   an error correction component that employs a multi-direction long short-term memory module to identify an error and correct the error.
6. The system of any preceding clause, wherein the computer executable components further comprise:
   a word generating component that generates a final word using the word feature vector and the image feature vector.
7. The system of any preceding clause, wherein the word generating component employs a bidirectional long short-term memory module to learn an association between the first content and the second content to generate the final word.
8. A method, comprising:
   splitting, by a system comprising a processor, a scanned content into blocks using a neural network and marks the blocks as textual content and image content;
   converting, by the system, the textual content to a word feature vector; and
   converting, by the system, the image content to an image feature vector.
9. The method of any preceding clause, further comprising:
   generating, by the system, a final word employing the word feature vector and the image feature vector.
10. The method of any preceding clause, wherein the generating the final word comprises learning an association between the textual content and the image content to generate the final word.
11. The method of any preceding clause, wherein the converting the textual content to the word feature vector comprises building a word from the textual content employing an optical character recognition model to recognize characters of the textual content.
12. The method of any preceding clause, wherein the converting the image content to the image feature vector comprises employing a convolution neural network to convert the image content to the image feature vector.
13. The method of any preceding clause, further comprising:
   identifying, by the system, an error using a multi-direction long short-term memory module; and
   correcting, by the system, the error using the multi-direction long short-term memory module.
14. The method of any preceding clause, wherein the converting the textual content to the word feature vector comprises employing a vector generating module to convert the textual content to the word feature vector.
15. A computer readable storage device comprising instructions that, in response to execution, cause a system comprising a processor to perform operations, comprising:
   splitting a scanned content into blocks using a neural network and tags the blocks as textual content and image content;
   converting, the textual content to a word feature vector; and
   converting the image content to an image feature vector.
16. The computer readable storage device of any preceding clause, wherein the operations further comprise:
   generating a final word employing the word feature vector and the image feature vector.
17. The computer readable storage device of any preceding clause, wherein the generating the final word comprises learning an association between the textual content and the image content to generate the final word.
18. The computer readable storage device of any preceding clause, wherein the operations further comprise:
   identifying an error using a multi-direction long short-term memory module; and
   correcting the error using the multi-direction long short-term memory module.
19. The computer readable storage device of any preceding clause, wherein the converting the textual content to the word feature vector comprises building a word from the textual content employing an optical character recognition model to recognize characters of the textual content.
20. The computer readable storage device of any preceding clause, wherein the converting the image content to the image feature vector comprises employing a convolution neural network to convert the image content to the image feature vector.

## Claims

1. A system, comprising:
a memory having stored thereon computer executable components;
a processor that executes at least the following computer executable components:
an image categorizing component that splits a scanned content into blocks using a neural network and tags the blocks as first content and second content;
a first content analyzing component that converts the first content to a word feature vector; and
a second content analyzing component that converts the second content to an image feature vector.

2. The system of claim 1, wherein the first content analyzing component comprises a word building component that builds a word from the first content employing an optical character recognition component to recognize characters of the first content.

3. The system of claim 2, wherein the first content analyzing component comprises a vector generating component that converts the word to the word feature vector.

4. The system of any of claims 1 to 3, wherein the second content analyzing component employs a convolution neural network to convert the second content to the image feature vector.

5. The system of any of claims 1 to 4, wherein the computer executable components further comprise:
an error correction component that employs a multi-direction long short-term memory module to identify an error and correct the error.

6. The system of any of claims 1 to 6, wherein the computer executable components further comprise:
a word generating component that generates a final word using the word feature vector and the image feature vector.

7. The system of claim 6, wherein the word generating component employs a bidirectional long short-term memory module to learn an association between the first content and the second content to generate the final word.

8. A method, comprising:
splitting, by a system comprising a processor, a scanned content into blocks using a neural network and marks the blocks as textual content and image content;
converting, by the system, the textual content to a word feature vector; and
converting, by the system, the image content to an image feature vector.

9. The method of claim 8, further comprising:
generating, by the system, a final word employing the word feature vector and the image feature vector.

10. The method of claim 9, wherein the generating the final word comprises learning an association between the textual content and the image content to generate the final word.

11. The method of any of claims 8 to 10, wherein the converting the textual content to the word feature vector comprises building a word from the textual content employing an optical character recognition model to recognize characters of the textual content.

12. The method of any of claims 8 to 11, wherein the converting the image content to the image feature vector comprises employing a convolution neural network to convert the image content to the image feature vector.

13. The method of any of claims 8 to 12, further comprising:
identifying, by the system, an error using a multi-direction long short-term memory module; and
correcting, by the system, the error using the multi-direction long short-term memory module.

14. The method of any of claims 8 to 13, wherein the converting the textual content to the word feature vector comprises employing a vector generating module to convert the textual content to the word feature vector.

15. A computer readable storage device comprising instructions that, in response to execution, cause a system comprising a processor to perform operations, comprising:
splitting a scanned content into blocks using a neural network and tags the blocks as textual content and image content;
converting, the textual content to a word feature vector; and
converting the image content to an image feature vector.
